Europäisches Patentamt

European Patent Office

Office européen des brevets

(11) Numéro de publication: **0 284 499**
A2

## (12) DEMANDE DE BREVET EUROPEEN

(21) Numéro de dépôt: 88400634.7

(22) Date de dépôt: 17.03.88

(51) Int. Cl.⁴: **B 62 D 47/02**
B 60 P 3/42

(30) Priorité: 25.03.87 FR 8704131

(43) Date de publication de la demande:
28.09.88  Bulletin  88/39

(84) Etats contractants désignés:
BE DE ES GB IT NL SE

(71) Demandeur: **Goudot, Daniel**
**49 Rue du Général De Gaulle**
**F-91240 St Michel s/Orge  (FR)**

(72) Inventeur: **Goudot, Daniel**
**49 Rue du Général De Gaulle**
**F-91240 St Michel s/Orge  (FR)**

(54) **Dispositif d'interchangeabilité de la sellerie sur plancher amovible pour autocars.**

(57)  Accessoires intérieurs rattachés au plancher d'un autocar tels que sièges, bar, wc. Le dispositif est caractérisé par un plateau (1) normalisé et amovible qui supporte la sellerie à l'exclusion du compartiment du chauffeur (2). Il peut être aisément retiré par la partie arrière du véhicule qui est aménagée d'une ou deux portes normalisées (5). Ledit plateau (1) glisse et repose sur des roulements à billes (4); un moteur à roue dentée (7) facilite le montage et le démontage; un dispositif à crochets (9) assure le verrouillage plateau (1)/structure (3). Le plateau comporte quatre pieds (10) pour le stockage hors-véhicule.

FIG 1

EP 0 284 499 A2

## Description

DISPOSITIF D'INTERCHANGEABILITE DE LA SELLERIE SUR PLANCHER AMOVIBLE POUR AUTOCARS

La présente invention concerne la partie intérieure d'un véhicule de transport en commun ou autocar. Elle affecte plus précisément l'ensemble des sièges ou toutes autres installations attachées au plancher de l'autocar tels que penderie, bar, toilettes, cuisine, à l'exclusion de la partie avant réservée au chauffeur et aux accompagnateurs.

Aujourd'hui, l'aménagement intérieur (ou sellerie) des autocars est monté fixe sur la structure du véhicule, même si les sièges peuvent être retirés individuellement, entraînant un usage prédéterminé de l'autocar (interurbain, ligne, tourisme ou grand tourisme).

La figure 1 représente, en coupe, le dispositif schématisé de l'invention.

La figure 2 représente, en vue de dessus, la liaison schématisée du plateau et de la structure de base.

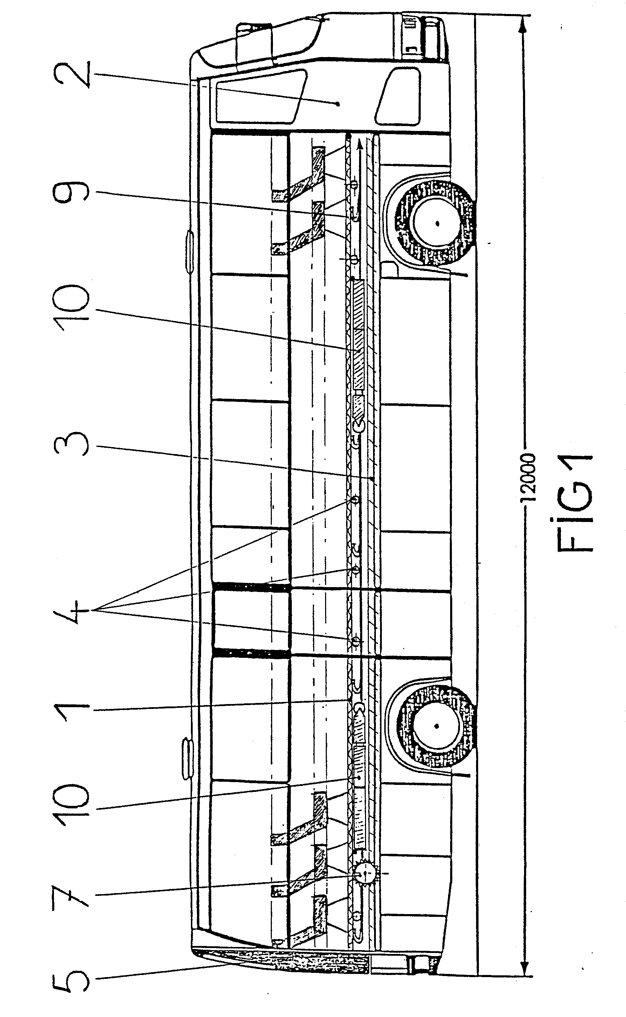

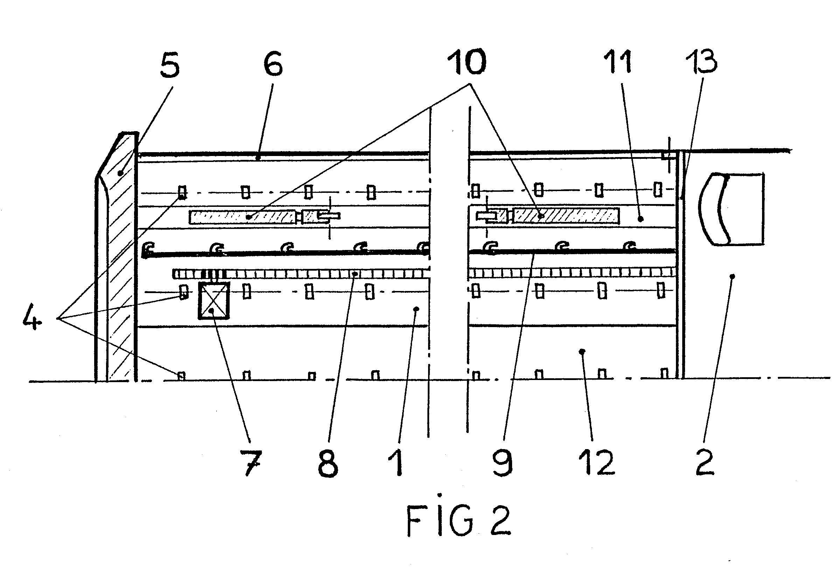

La présente invention a pour but de permettre un changement rapide, facile et fréquent, suivant les besoins, des équipements normalement solidaires du plancher d'un autocar. Pour ce faire, selon l'invention et en se rapportant aux figures 1 et 2, un plateau (1) en métal (tel qu'aluminium à nid d'abeille ou plaque renforcée), en matériau composite ou en plastique renforcé afin de donner une rigidité adéquate et un poids minimal, remplace le plancher fixe sans comprendre la partie avant (2) réservée au chauffeur et à la porte d'accès. Il repose sur la structure (3) de l'autocar (tubulaire ou treillis) qui est agrémentée de rangées de roulements à billes (4) pour en faciliter la translation avant-arrière pendant le montage et le démontage. Ces manoeuvres sont effectuées par la partie arrière du véhicule, laquelle est formée d'une ou de deux portes (5) solidaires soit de la carrosserie soit du plateau lui-même.

Le plateau (1) est monté entre deux glissières (6) fixées à la base des parois latérales de l'autocar. L'entraînement du plateau en avant ou en arrière est assuré par un ou deux moteurs électriques ou pneumatiques à roue dentée (7) s'enclenchant sur une crémaillère (8) existant sur la partie inférieure du plateau. Ces moteurs font partie de la structure de l'autocar. Le glissement du plateau est facilité par un jeu de roulements en bout dudit plateau et logés dans la glissière (6).

La fixation du plateau sur la structure de l'autocar en position transport est effectuée par l'intermédiaire de deux ou quatre tiges (droite et gauche) (9) dans le sens de la longueur du véhicule et munies de plusieurs crochets; ceux-ci, par une rotation de 90° et par une translation vers l'avant provoquée par un vérin pneumatique ou électrique, viennent s'enclencher dans des logements prévus à cette effet dans la partie inférieure du plateau. La ou les portes (5) arrière n'interviennent pas dans le blocage du plateau, mais elles permettent d'assurer l'étanchéité de l'ensemble.

Les montages, démontages et stockages du plateau, selon l'invention, sont permis par quatre pieds (10) placés sous celui-ci. Ces pieds sont réglables en hauteur par une technique pneumatique provenant du véhicule et orientables par une roue montée sur un axe à sa partie inférieure. Les pieds sont escamotables sous le plateau dans le sens de la longueur et viennent se loger lors du montage dans deux rainures (11) présentes dans la structure de base de l'autocar.

La forme du plateau peut reproduire la forme actuelle généralement utilisée pour le plancher fixe qui autorise un passage central plus bas. La liaison de l'avant du plateau avec la structure c'est-à-dire avec le plancher du compartiment du chauffeur (2), est assurée par un joint rectiligne (13) soit en boudin plastique ou caoutchouc soit une équerre métallique. Tout autre évidement du plateau, par exemple pour permettre l'accès à une sortie médiane, aura une étanchéité assurée par de tels joints. De même, les cotés du plateau ainsi que les bouches de chauffage utliseront la même technique. Ces joints sont généralement comprimés par le verrouillage du plateau à l'aide des crochets (9).

Si des liaisons électriques, phoniques ou de radio sont désirées entre la structure et le plateau, afin d'alimenter des équipements de sièges par exemple, elles seront assurées par des connecteurs en bout de plateau.

Notons que l'invention entraîne une modification de principe de la réalisation des autocars; ainsi, du fait de l'absence de plancher, la partie intérieure laisse apparaître la structure du véhicule et tous les accessoires. Ceci facilite grandement la maintenance et les réparations de tous les équipements situés dans le soubassement de l'autocar tels que moteur, organes de transmission, systèmes pneumatiques, circuits électriques, air conditionné, etc..

D'autre part, la ou les portes arrière (5) doivent être standardisées pour accepter le montage de tous les types de plateaux. Par suite, une normalisation desdits plateaux et de la (les) porte(s) est nécessaire pour un constructeur et au delà entre constructeurs, afin de permettre une totale interchangeabilité des plateaux entre eux. Cette porte est verrouillée par des fermetures hermétiques automatiques et manuelles pour la sécurité.

Notons que la solution d'une porte normalisée à relevage horizontale type hayon faciliterait la manipulation des plateaux.

Par suite de l'invention, les plateaux qui seront échangés en quelques dizaines de minutes à la demande du client, permettront une adaptation entraînant un rendement maximal de l'autocar:

- un arrêt plus court pour réparation ou maintenance du véhicule par une meilleure accessibilité,

- aucun arrêt pour réparation ou maintenance de la sellerie sur plateau,

- une totale adaptabilité aux besoins des utilisateurs.

De plus il en résulte une plus grande sécurité en cas d'accident (retrait partiel ou total du plateau autorisant un accès rapide des secours ou une libération massive des personnes)

Ainsi, les plateaux peuvent être équipés de différents agencements actuels ou nouveaux permis par la rentabilité du dispositif flexible. Ce peut être un plateau:
- à sièges pour grandes personnes,
- à sièges pullman type avion,
- à sièges pour enfants,
- à densité variable de sièges,
- avec toilettes, bar, vestiaire, cuisine etc,
- avec couchettes
- salon,
- salle de projection,
- plus spécifique comme:
- ambulance collective,
- loge d'artiste + penderie,
- présentation publicitaire, etc.

## Revendications

1 - Dispositif qui permet le changement de l'agencement intérieur ou sellerie d'un autocar par l'intermédiaire d'un plateau (1) amovible grâce à une ou deux portes (5) arrière solidaires du plateau ou de la structure (3) du véhicule, possédant quatre pieds (10), un système de montage à moteur (7) et un dispositif de verrouillage à crochets (9).

2 - Dispositif selon la revendication 1 caractérisé par une ou deux portes (5) arrière du véhicule verrouillées par des fermetures hermétiques automatiques ou manuelles.

3 - Dispositif selon la revendication 1 caractérisé en ce que le plateau (1) possède quatre pieds (10) munis d'une base à roue orientable, réglables en hauteur par système pneumatique relié au véhicule et repliables sous ledit plateau.

4 - Dispositif selon la revendication 1 caractérisé en ce que la structure de base (3) inclut un ou deux moteurs électriques à roue dentée (7) permettant le montage et démontage du plateau (1), celui-ci possédant une ou deux crémaillères (8) à sa partie inférieure.

5 - Dispositif selon la revendication 1 caractérisé en ce que la structure de base (3) inclut pour le verrouillage du plateau (1) deux tiges à crochets (9) actionnées par un vérin pneumatique ou électrique.

6 - Dispositif selon la revendication 1 caractérisé en ce que la structure de base (3) comprend plusieurs rangées de roulements à billes (4) comme support du plateau (1) et permettant ses mouvements de montage et de démontage.

7 - Dispositif selon la revendication 1 caractérisé en ce que les montages et démontages du plateau (1) se font par l'intermédiaire de deux glissières latérales (6) fixées à la structure (3) du véhicule.

8 - Dispositif selon les revendications 1 et 2 précédentes caractérisé en ce que la liaison plateau / structure (3) est assurée par un joint (13) soit du type boudin en caoutchouc ou plastique soit du type équerre métallique.

9 - Dispositif selon la revendication 1 caractérisé par un plateau (1) en matière métallique rigidifié par nids d'abeille, en matière composite ou en plastique renforcé pour en réduire le poids.

10 - Dispositif selon l'une quelconque des revendications précédentes caractérisé en ce que le plateau (1), la ou les portes arrière (5), les glissières latérales (6), les rangées de roulement à billes (4), la crémaillère (8) et les pieds (10) sont standardisés pour assurer l'interchangeabilité entre plateaux équipés de différents agencements.

0284499

FIG1

FIG 2